# FASCICULE DE BREVET EUROPEEN

(11) **EP 0 676 748 B1**
(45) Date de publication et mention de la délivrance du brevet: **06.10.1999**
(21) Numéro de dépôt: 95400749.8
(22) Date de dépôt: 04.04.1995
(51) Int. Cl.: G11B 5/48

(54) **Patin de vol à moyens de suspension flexibles intégrés**
Fliegender Kopf mit integrierter flexibler Aufhängungsvorrichtung
Flying head with integrated flexible suspension means

(30) Priorité: 06.04.1994 FR 9404013
(43) Date de publication de la demande: 11.10.1995
(73) Titulaire: SILMAG S.A., 38054 Grenoble Cédex 9 (FR)
(72) Inventeur: Lazzari, Jean-Pierre, F-38700 Corenc (FR)
(74) Mandataire: Dubois-Chabert, Guy

(56) Documents cités:
- EP-A- 0 152 327
- EP-A- 0 265 721
- EP-A- 0 580 442
- US-A- 5 065 271
- US-A- 5 166 845
- PATENT ABSTRACTS OF JAPAN vol. 14, no. 534 (P-1135) 26 Novembre 1990 & JP-A-01 226 512 (MITSUBISHI)

## Description

### Domaine technique

La présente invention a pour objet un patin de vol à moyens de suspension flexible intégrés. Elle trouve une application dans l'enregistrement magnétique (sur disque, bande, etc...).

### Etat de la technique

Un patin de vol est un dispositif qui comprend une ou plusieurs têtes magnétiques de lecture et/ou d'écriture, un plan de vol présentant un profil approprié et divers moyens de connexion électrique entre la tête et des organes extérieurs. Le patin est fixé à l'extrémité d'un bras apte à appliquer une force d'appui de quelques grammes qui, en fonctionnement, va compenser la force de sustentation produite par l'écoulement de l'air entre le patin et le support d'enregistrement.

Le bras de suspension comprend, en général, une base plate, une poutre de charge (en anglais "load beam") et un moyen flexible de suspension en forme de languette (en anglais "tongue"), sous laquelle le patin est suspendu.

La base est serrée sur une plateforme. La poutre est pliée au niveau de la base, la pliure jouant le rôle de ressort. Le moyen flexible est généralement formé par une découpe en bout de poutre, et constitue des ressorts plats sur lesquels vient se coller le patin. Le patin présente ainsi deux degrés de liberté, dans un mouvement de type cardan, ce qui lui permet d'épouser parfaitement les ondulations du support d'enregistrement pendant le déplacement de celui-ci. Des moyens de connexion électrique sont prévus, qui comprennent des intraconnexions traversant le patin et aboutissant à des plots de connexion fixés sur la face supérieure du patin. Des fils conducteurs, généralement collés sur la poutre de charge, relient les plots de connexion à des circuits extérieurs.

Un tel assemblage patin de vol/bras support est décrit dans de nombreux documents, notamment dans les brevets américains US-A-4,789,914 et US-A-4,819,094.

Une description de cet assemblage est également donnée dans la demande de brevet français n°93 12941 du 29 octobre 1993 intitulée "Assemblage patin de vol/bras ressort à plots de soudure composite et procédé de réalisation" et publiée sous le numéro FR-A-2 711 830.

S'agissant plus spécialement des moyens flexibles de suspension du patin, ils sont généralement gravés dans la feuille de métal constituant la poutre, en bout de celle-ci. Afin de donner au flexible une souplesse suffisante, il est souvent nécessaire de réduire, en bout, l'épaisseur de la feuille constituant la poutre. Les formes gravées sont très souvent en double cardan avec des barres de torsion orthogonales. Ces barres ont une épaisseur réduite, afin qu'elles n'appliquent pas au patin des couples trop importants. Les conditions de vol sont alors essentiellement fixées par les forces dynamiques de vol et non par l'élasticité du flexible. Ainsi, les couples de torsion engendrés par le flexible sont généralement 50 à 100 fois inférieurs aux couples engendrés par le coussin d'air sous le patin de vol.

D'autres technologies sont en cours de développement, qui se rapprochent des technologies de la microélectronique. Elles permettent de réaliser, par exemple sur une plaquette de silicium, un grand nombre de flexibles de petite dimension. Ces approches sont décrites par exemple dans l'article de Jonathan A. WICKERT et al., intitulé "Towards a Micromachined Dual Slider and Suspension Assembly for Contact Recording", publié dans la revue TRIB vol. 3, Concepts in Contact Recording, ASME 1992, pp. 27-39.

Il est également connu de former un patin de vol comprenant une tête magnétique par dépôt de couches minces sur l'extrémité d'une lame servant de moyen flexible de suspension du patin de vol. Une telle approche est décrite dans US-A-5 065 271.

Bien que donnant satisfaction à certains égards, ces solutions de l'art antérieur présentent toutes des inconvénients. S'agissant de la première solution, à bras flexible, son coût est élevé. On peut estimer que la base coûte de l'ordre de 50 centimes, la poutre de chargement de l'ordre de 1 franc et le flexible de l'ordre de 2F50. De plus, si le flexible est de mauvaise qualité, ce qui est souvent le cas car c'est la partie la plus délicate de la suspension, c'est tout l'assemblage qui est perdu.

Lorsque les patins se réduisent en dimension, les couples ressorts du flexible doivent être réduits en proportion. Les barres de torsion doivent donc être réduites également et les dimensions commencent à devenir critiques. Les tolérances de découpe et de gravure deviennent de plus en plus difficiles à tenir, car il s'agit de graver des tôles fines. En conséquence, leur coût augmente rapidement.

Quant aux technologies de la microélectronique, elles permettent d'obtenir des dimensions plus réduites, et surtout, une plus grande précision. Elles présentent donc de l'intérêt. Par ailleurs, elles autorisent des réalisations collectives sur une même tranche de silicium, ce qui réduit le coût de chaque élément. Mais elles nécessitent des opérations de découpe délicates, des manipulations diverses ainsi que des opérations d'assemblage supplémentaires. En effet, il convient de monter le flexible sur la poutre de chargement, puis de monter le patin sous le flexible. L'ensemble de ces opérations délicates pénalise lourdement cette technique.

La présente invention a justement pour but de remédier à ces inconvénients.

### Exposé de l'invention

A cette fin, l'invention propose un nouveau patin de vol, très simple à réaliser et donc peu coûteux. Selon l'invention, on réalise le moyen flexible par les technologies de la microélectronique sur le substrat même de silicium. Les moyens flexibles ne sont donc plus séparés du patin, mais formés sur le substrat servant à réaliser le patin. De ce fait, le flexible se trouve être positionné automatiquement et avec une extrême précision par rapport au plan de vol. Il ne reste donc qu'un seul assemblage à effectuer, celui du patin équipé de son propre flexible et de la poutre de chargement. Mais, dans ce cas, aucune précision particulière n'est exigée. De ce fait, le produit fini sera très bon marché et le rendement de fabrication élevé.

De façon précise, l'invention a pour objet un patin de vol pour enregistrement magnétique, comprenant un substrat avec une première face contenant au moins une tête d'écriture et de lecture, cette première face étant destinée à être placée en regard d'un support d'enregistrement et une seconde face opposée à la première et apte à être reliée à l'extrémité d'un bras par des moyens flexibles de suspension, ce patin de vol étant caractérisé par le fait que lesdits moyens flexibles de suspension sont formés sur ladite seconde face du substrat, les moyens flexibles de suspension étant constitués de barres parallèles à la seconde face du substrat et écartées du substrat sur une partie de leur longueur, ces barres étant constituées par une couche mince.

### Brève description des dessins

- la figure 1 montre une plaquette de silicium pour une fabrication collective de patins de vol selon l'invention ;
- la figure 2 montre cette plaquette en coupe ;
- la figure 3 montre, en coupe, une intraconnexion et un plot de connexion ;
- la figure 4 illustre une étape de gravure ;
- la figure 5 illustre une étape de dépôt de couche conductrice ;
- la figure 6 illustre une étape de dépôt d'une couche de résine ;
- la figure 7 montre, en vue de dessus, un motif dessiné dans la couche de résine ;
- la figure 8 illustre, selon une première coupe, une seconde gravure ;
- la figure 9 illustre la même gravure mais selon une deuxième coupe ;
- la figure 10 illustre encore la même gravure mais selon une troisième coupe ;
- la figure 11 illustre, selon une première coupe, une étape de croissance électrolytique de métal ;
- la figure 12 illustre la même étape selon une deuxième coupe ;
- la figure 13 illustre une étape de formation d'une ouverture en bout de poutre ;
- la figure 14 illustre, selon une première coupe, une étape de dégagement partiel des barres de torsion ;
- la figure 15 illustre la même étape selon une seconde coupe ;
- la figure 16 illustre, selon une première coupe, une étape de dégagement total des barres de torsion ;
- la figure 17 illustre la même étape selon une seconde coupe ;
- la figure 18 montre la face supérieure d'un patin de vol conforme à l'invention selon un premier mode de réalisation à trois barres de torsion ;
- la figure 19 montre la face supérieure d'un patin de vol conforme à l'invention selon un premier mode de réalisation à quatre barres de torsion ;
- la figure 20 illustre une première étape d'un autre mode de réalisation utilisant une couche métallique de base ;
- la figure 21 illustre une gravure dans ce même mode de réalisation ;
- la figure 22 illustre une autre étape de ce même mode de réalisation ;
- la figure 23, enfin, montre un assemblage bras-support/patin de vol conforme à l'invention.

### Exposé détaillé de modes de réalisation

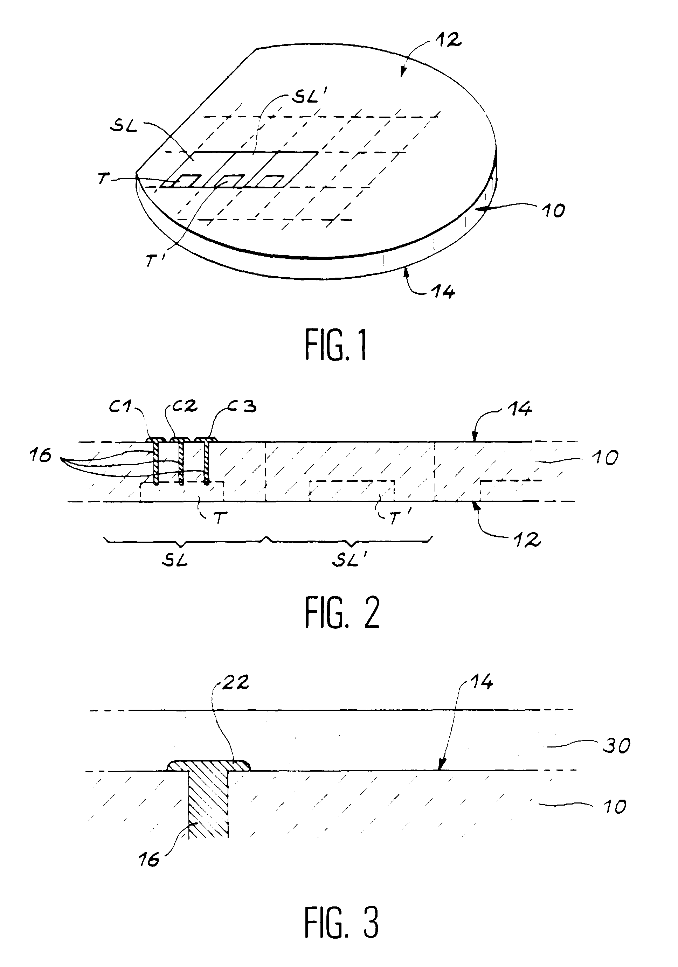

On voit, sur la figure 1, en perspective et sur la figure 2, en coupe, une plaquette de silicium 10 avec une première face 12 sur laquelle sont formés des patins de vol SL, SL', ... avec leurs têtes de d'écriture et/ou de lecture T, T', etc... et une seconde face 14 sur laquelle affleurent des plots de connexion C1, C2, C3, reliés à la tête par des conducteurs d'intraconnexion 16.

Sur la figure 1, la première face 12 est représentée tournée vers le haut, dans une position correspondant à la réalisation des têtes de lecture et d'écriture. Sur les autres figures, cette même face sera tournée vers le bas, dans une position qui correspond à la réalisation des moyens flexibles sur la seconde face 14.

Sur la figure 3, on voit le substrat 10 avec sa seconde face 14 et un plot de connexion quelconque référencé 22, relié à un conducteur intraconnexion 16. Sur la face supérieure 14, on dépose une couche 30 relativement épaisse (5 à 20 µm) d'un matériau organique soluble dans un solvant ordinaire (l'acétone par exemple). Cette couche organique 30 peut être une couche de résine telle qu'on en utilise en photolithographie, ou une couche en polyimide par exemple.

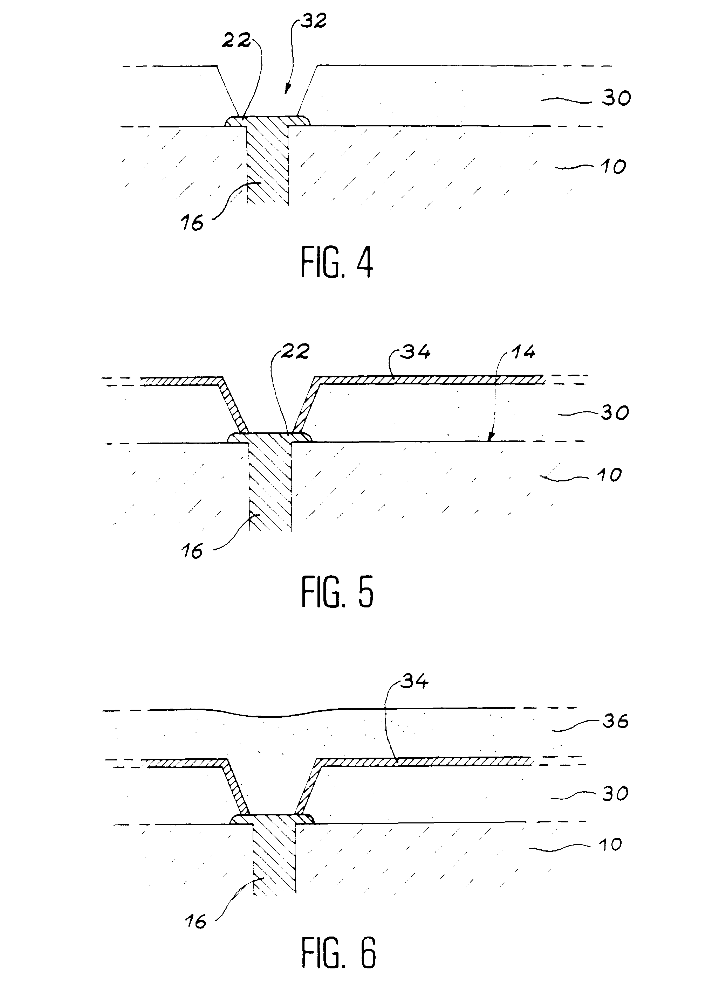

On réalise ensuite (figure 4) une photolithographie suivie d'une révélation afin de creuser une ouverture 32 dégageant le plot 22.

On dépose ensuite sur l'ensemble (fig. 5) une couche conductrice 34, par exemple en fer-nickel, puis (fig. 6) une seconde couche 36 de résine photosensible de forte épaisseur (5 à 20 µm).

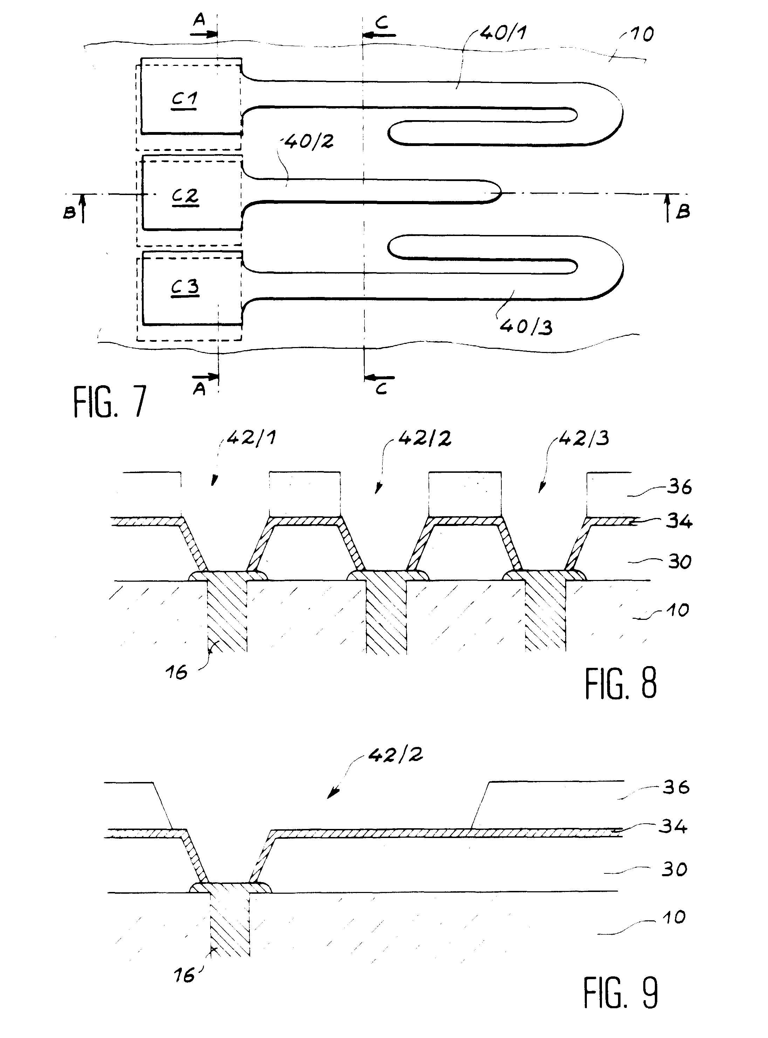

On réalise ensuite une insolation au travers d'un masque dont le motif représente les futures barres flexibles désirées. La figure 7 montre, en vue de dessus, une forme possible pour ce motif. Dans l'exemple représenté, on voit trois profils 40/1, 40/2, 40/3, les premier et troisième étant symétriques et présentant une forme de doigt recourbé, le deuxième étant rectiligne.

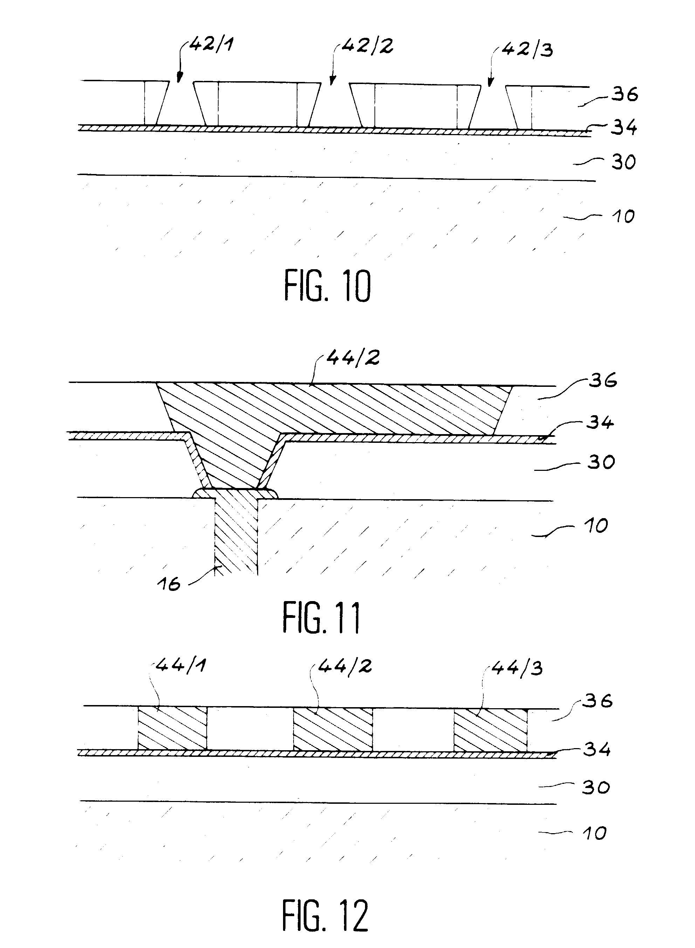

Ces motifs ayant été réalisés dans le masque, on insole la résine supérieure et on la révèle pour obtenir des caissons. La figure 8 montre la forme des caissons 42/1, 42/2, 42/3 en coupe selon la ligne AA passant au travers d'un plot de connexion, la figure 9 le caisson 42/2 en coupe selon la ligne BB correspondant au doigt central 40/2 et la figure 10 les caissons 42/1, 42/2, 42/3 correspondant à une coupe selon la ligne CC.

Au fond de ces caissons apparaît la couche conductrice 34. On utilise cette couche comme électrode pour faire croître électrolytiquement une couche métallique à l'intérieur des caissons. Le métal utilisé peut être, par exemple, le fer-nickel. L'épaisseur donnée à cette couche est sensiblement celle de la couche de résine 36, c'est-à-dire 5 à 20 µm environ.

D'autres matériaux que le fer-nickel peuvent être employés. Ils doivent présenter des caractéristiques mécaniques intéressantes de souplesse et de robustesse, car ils vont constituer le matériau des futures barres de flexion. On peut utiliser aussi des alliages comme des alliages de cuivre ou de bronze Par ailleurs, le choix d'un matériau conducteur permettra d'utiliser la couche comme moyen de connexion électrique.

La figure 11 montre la couche métallique 44/2 en coupe selon la ligne BB de la figure 10, c'est-à-dire selon l'axe médian de la poutre centrale. La figure 12 est une coupe selon la ligne CC et montre les sections des barres 44/1, 44/2, 44/3.

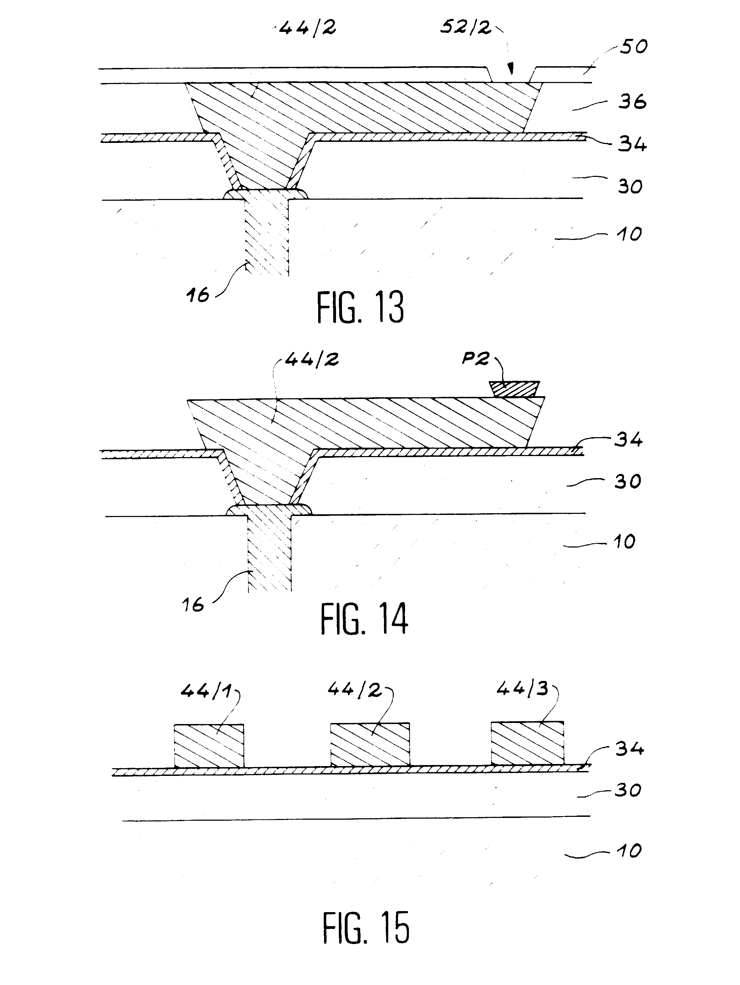

Une fois les caissons remplis par la couche métallique, on dépose sur l'ensemble (fig. 13) une couche de résine photosensible 50 d'épaisseur 5 à 15 µm environ. Puis on pratique une insolation suivie d'une révélation pour réaliser une ouverture en bout de barre. La figure 13 correspond à une coupe le long de la barre centrale et montre l'ouverture pratiquée 52/2. Les mêmes ouvertures sont pratiquées aux extrémités des deux autres barres recourbées.

A l'intérieur de ces ouvertures, on fait croître électrolytiquement un métal, par exemple du fer-nickel, pour réaliser un plot de fixation. La figure 14 montre ainsi le plot P2 disposé à l'extrémité de la barre centrale 44/2. On peut recouvrir ces plots par une couche d'un métal fondant à basse température, par exemple une couche d'étain/plomb. Les mêmes plots sont réalisés aux extrémités des deux autres barres.

On dissout ensuite les couches de résine 50 et 36 jusqu'à la couche conductrice 34. On obtient l'ensemble illustré sur la figure 14, qui est une coupe selon la ligne BB passant par la barre centrale et sur la figure 15 qui est une coupe selon la ligne CC.

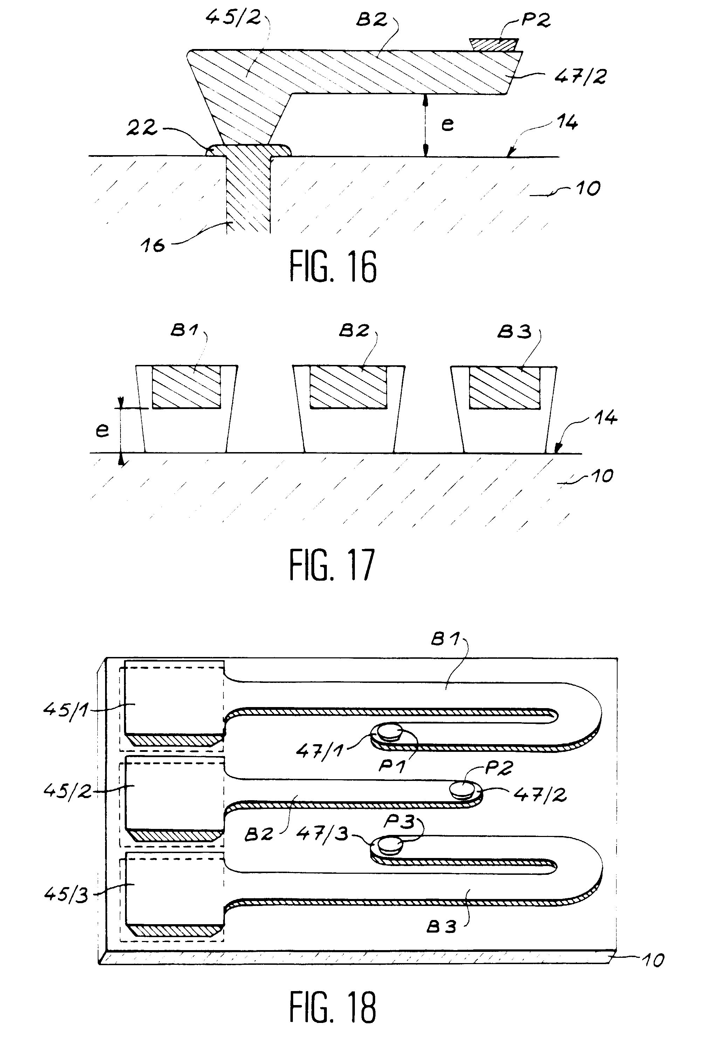

On grave ensuite la couche conductrice 34, par exemple par pulvérisation cathodique, ce qui met à nu la première couche de résine employée 30. On dissout cette couche pour libérer totalement les barres. Sur la figure 16, on voit ainsi, en coupe, la barre centrale, référencée B2, avec une extrémité 45/2 solidaire du plot de connexion 22 et une extrémité 47/2 libre et écartée du substrat 10 d'une quantité e. Cet écart correspond à l'épaisseur de la première couche de résine.

Sur la figure 17, on voit les trois barres B1, B2, B3 en coupe selon la ligne CC de la figure 10.

On peut ensuite découper la plaquette ainsi traitée pour obtenir des patins de vol individuels. Un tel patin est représenté sur la figure 18. Dans la variante illustrée, les moyens flexibles comprennent trois barres référencées B1, B2, B3, les barres B1 et B2 présentant une forme en doigt recourbé avec une extrémité 45/1, 45/3 solidaire des plots de connexion et une extrémité libre 47/1, 47/3 écartée du substrat et munie de plots de fixation P1, P3 disposés au-dessus de ces extrémités libres. La barre centrale B2 est rectiligne et présente une extrémité 45/2 reliée au plot de connexion correspondant et une extrémité libre 47/2 avec un plot de fixation P2.

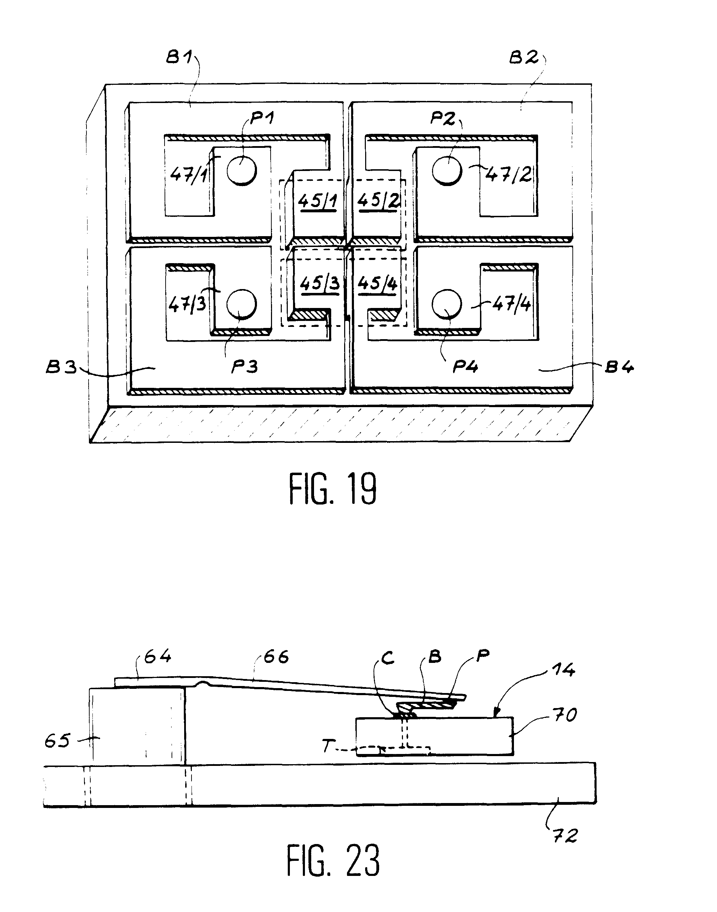

La figure 19 montre un autre mode de réalisation d'un patin de vol conforme à l'invention, avec quatre barres B1, B2, B3, B4 au lieu de trois. Ces barres ont leurs extrémités 45/1, 45/2, 45/3, 45/4 solidaires des quatre plots de connexion et leurs extrémités libres 47/1, 47/2, 47/3, 47/4 munies de plots P1, P2, P3, P4.

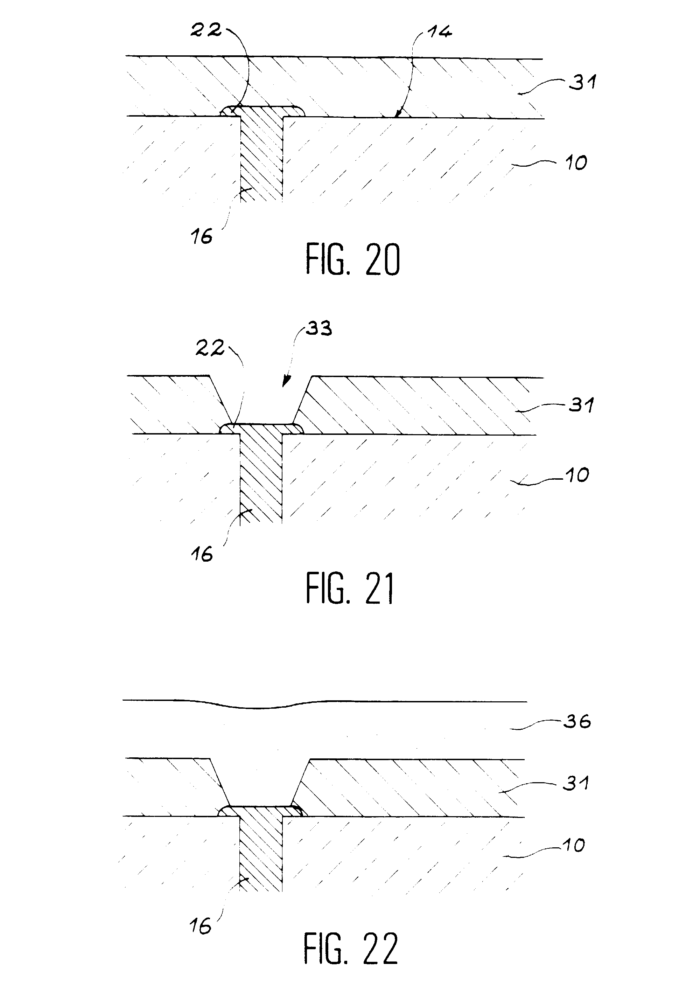

Dans la description qui précède, l'opération de croissance électrolytique s'effectue à partir de la couche conductrice 34 déposée sur la première couche de résine 30. Mais cette manière de faire n'est nullement unique. Les figures 20 à 22 ilustrent une autre variante dans laquelle on dépose, sur le substrat 10, une couche 31 qui est une couche conductrice susceptible d'être gravée. Il peut s'agir, par exemple, d'une couche de cuivre. La première couche de résine est donc omise.

La figure 21 montre comment l'on dégage ensuite les plots de connexion 22 par gravure d'une ouverture 33 dans la couche métallique 31.

On dépose ensuite une couche de résine 36 analogue à la seconde couche de résine utilisée dans la première variante (fig. 22). Les opérations ultérieures sont analogues aux opérations déjà décrites, si ce n'est que la croissance électrolytique du métal constituant les barres s'effectue en prenant la couche métallique 31 comme électrode. On libère les barres en fin de procédé en gravant la couche métallique 31.

Le montage du patin de vol sur un bras est très simple comme le montre la figure 23. Le bras proprement dit ne comprend plus qu'une base 64 fixée sur une tige 65 et une poutre 66. A l'extrémité de cette poutre, on suspend le patin de vol 70 par les moyens flexibles qui lui sont intégrés, c'est-à-dire, en pratique, en soudant le bras sur les plots P disposés à l'extrémité des barres B. Ces barres sont réliées aux plots de connexion C, eux-mêmes reliés à la tête T, laquelle se trouve en regard du support d'enregistrement 72.

Il est possible d'utiliser certaines barres pour réaliser simultanément la fonction de suspension et celle de connexion électrique. Mais d'autres barres peuvent être utilisées exclusivement pour la suspension flexible.

## Revendications

1. Patin de vol pour enregistrement magnétique, comprenant un substrat (10) avec une première face (12) contenant au moins une tête d'écriture et de lecture, cette première face étant destinée à être placée en regard d'un support d'enregistrement (72), et une seconde face (14) opposée à la première et apte à être reliée à l'extrémité d'un bras (66) par des moyens flexibles de suspension, ce patin de vol étant caractérisé par le fait que lesdits moyens flexibles de suspension (B1, B2, B3, B4) sont formés sur ladite seconde face (14) du substrat(10), ces moyens flexibles de suspension étant constitués par des barres (B1, B2, B3, B4) parallèles à la seconde face (14) du substrat (10) et écartées du substrat sur une partie de leur longueur, ces barres étant constituées par une couche mince.

2. Patin de vol selon la revendication 1, caractérisé par le fait que chaque barre (B1, B2, B3, B4) possède une première extrémité (45/1, 45/2, 45/3, 45/4) solidaire du substrat (10) et une seconde extrémité (47/1, 47/2, 47/3, 47/4) libre et surélevée par rapport au substrat (10).

3. Patin de vol selon la revendication 2, caractérisé par le fait que, ladite seconde face (14) contenant des plots de connexion (C1, C2, C3, C4) reliés électriquement à la tête d'écriture et de lecture (T), au moins une des barres (B1, B2, B3, B4) a sa première extrémité (45/1, 45/2, 45/3, 45/4) reliée à un plot de connexion (C1, C2, C3, C4), cette ou ces barres constituant ainsi à la fois un moyen flexible de suspension et un moyen de connexion électrique.

4. Patin de vol selon la revendication 1, caractérisé par le fait que la couche mince dont sont faites les barres (B1, B2, B3, B4) est un métal ou un alliage métallique.

5. Patin de vol selon la revendication 4, caractérisé par le fait que le métal de la couche mince constituant chaque barre (B1, B2, B3, B4) est obtenu par croissance électrolytique.

6. Patin de vol selon la revendication 5, caractérisé par le fait que le métal est du fer-nickel.

7. Patin de vol selon la revendication 2, caractérisé par le fait que chaque barre (B1, B2, B3, B4) comprend, à sa seconde extrémité libre (47/1, 47/2, 47/3, 47/4), des plots de fixation (P1, P2, P3, P4) en un matériau apte à permettre une fixation à l'extrémité d'un bras (66) support de patin.

8. Patin de vol selon la revendication 7, caractérisé par le fait que les plots de fixation (P1, P2, P3, P4) comprennent, au moins à leur partie supérieure, un métal fondant à basse température.

9. Patin de vol selon la revendication 8, caractérisé par le fait que le métal fondant à basse température est un alliage d'étain-plomb.

## Patentansprüche

1. Gleitkörper zur magnetischen Aufzeichnung, ein Substrat (10) mit einer wenigstens einen Schreib- und Lesekopf enthaltenden ersten Seite (12) umfassend, wobei diese erste Seite dazu bestimmt ist, einem Aufzeichnungsträger (72) gegenüber angeordnet zu werden, und eine zweite Seite (14), der ersten entgegengesetzt, mit flexiblen Aufhängungseinrichtungen zur Verbindung mit dem Ende eines Arms (66),
**dadurch gekennzeichnet,**
daß die genannten flexiblen Aufhängungseinrichtungen (B1, B2, B3, B4) auf der zweiten Seite (14) des Substrats (10) ausgebildet sind, wobei diese flexiblen Aufhängungseinrichtungen durch Stäbe (B1, B2, B3, B4) gebildet werden, die zu der zweiten Seite (14) des Substrats (10) parallel sind und über einen Teil ihrer Länge von dem Substrat beabstandet sind, und diese Stäbe durch eine dünne Schicht gebildet werden.

2. Gleitkörper nach Anspruch 1, dadurch gekennzeichnet, daß jeder Stab (B1, B2, B3, B4) ein mit dem Substrat (10) fest verbundenes erstes Ende (45/1, 45/2, 45/3, 45/4) und ein freies, vom Substrat (10) abgehobenes zweites Ende (47/1, 47/2, 47/3, 47/4) besitzt.

3. Gleitkörper nach Anspruch 2, dadurch gekennzeichnet, daß die genannte zweite Seite (14) Anschlußelemente (C1, C2, C3, C4) umfaßt, die elektrisch mit dem Schreib- und Lesekopf (T) verbunden sind, daß wenigstens einer der Stäbe (B1, B2, B3, B4) an seinem ersten Ende (45/1, 45/2, 45/3, 45/4) mit einem Anschlußelement (C1, C2, C3, C4) verbunden ist, wobei dieser Stab oder diese Stäbe zugleich eine flexible Aufhängungsvorrichtung und eine elektrische Verbindungseinrichtung bildet bzw. bilden.

4. Gleitkörper nach Anspruch 1, dadurch gekennzeichnet, daß die dünne Schicht, aus der die Stäbe (B1, B2, B3, B4) gemacht sind, aus einem Metall oder einer Metallegierung ist.

5. Gleitkörper nach Anspruch 4, dadurch gekennzeichnet, daß das jeden Stab (B1, B2, B3, B4) bildende Metall der dünnen Schicht durch elektrolytisches Wachstum erhalten wird.

6. Gleitkörper nach Anspruch 5, dadurch gekennzeichnet, daß das Metall Eisen-Nickel ist.

7. Gleitkörper nach Anspruch 2, dadurch gekennzeichnet, daß jeder Stab (B1, B2, B3, B4) an seinem zweiten, freien Ende (47/1, 47/2, 47/3, 47/4) Befestigungselemente (P1, P2, P3, P4) aus einem Material umfaßt, das sich für eine Befestigung am Ende eines Gleitkörper-Trägerarms (66) eignet.

8. Gleitkörper nach Anspruch 7, dadurch gekennzeichnet, daß die Befestigungselemente (P1, P2, P3, P4) wenigstens an ihrem Oberteil ein bei niedriger Temperatur schmelzendes Metall umfassen.

9. Gleitkörper nach Anspruch 8, dadurch gekennzeichnet, daß das bei niedriger Temperatur schmelzende Material eine Zinn-Blei-Legierung ist.

## Claims

1. Slider for magnetic recording comprising a substrate (10) with a first face (12) containing at least one read and write head, said first face being placed in front of a recording support (72) and a second face (14), opposite to the first and which can be connected to the end of an arm (66) by flexible suspension means, said slider being characterized in that said flexible suspension means (B1, B2, B3, 84) are formed on said second face (14) of the substrate (10), the flexible suspension means being constituted by bars (B1, B2, B3, B4) parallel to the second face (14) of the substrate (10) and spaced from the substrate over part of their length, said bars being constituted by a thin metal layer.

2. Slider according to claim 1, characterized in that each bar (B1, B2, B3, B4) has a first end (45/1, 45/2, 45/3, 45/4) integral with the substrate (10) and a second end (47/1, 47/2, 47/3, 47/4) free and raised with respect to the substrate (10).

3. Slider according to claim 2, characterized in that with the second face (14) containing the connectors (C1, C2, C3, C4) electrically connected to the read and write head (T), at least one of the bars (B1, B2, B3, B4) has its first end (45/1, 45/2, 45/3, 45/4) connected to a connector (C1, C2, C3, C4), said bar or bars thus forming both a flexible suspension means and an electrical connection means.

4. Slider according to claim 1, characterized in that the thin layer from which are formed the bars (B1, 82, B3, B4) is a metal or a metal alloy.

5. Slider according to claim 4, characterized in that the metal of the thin layer constituting each bar (B1, B2, B3, B4) is obtained by electrolytic growth.

6. Slider according to claim 5, characterized in that the metal is iron-nickel.

7. Slider according to claim 2, characterized in that each bar (B1, B2, B3, B4) has at its second free end (47/1, 47/2, 47/3, 47/4) fixing elements (P1, P2, P3, P4) made from a material able to permit a fixing to the end of a slider support arm (66).

8. Slider according to claim 7, characterized in that the fixing elements (P1, P2, P3, P4) comprise, at least at their upper part, a metal melting at low temperature.

9. Slider according to claim 8, characterized in that the metal melting at a low temperature is a tin-lead alloy.
